# EUROPÄISCHE PATENTANMELDUNG

(11) **EP 3 637 183 A1**
(43) Veröffentlichungstag der Anmeldung: **15.04.2020**
(21) Anmeldenummer: 19195352.0
(22) Anmeldetag: 04.09.2019
(51) Int. Cl.: G03B 17/02, G02B 7/02, G03B 17/12

(54) **BILDSENSORHALTEELEMENT UND VERFAHREN ZUR HERSTELLUNG EINES BILDSENSORHALTEELEMENTS**

(30) Priorität: 26.09.2018 DE 102018216387
(71) Anmelder: Robert Bosch GmbH, 70442 Stuttgart (DE)
(72) Erfinder: Diesel, Peter, 87541 Bad Hindelang (DE)

(57) **Zusammenfassung**

Die Erfindung betrifft ein Bildsensorhalteelement zur Halterung eines Bildsensors und eines Objektivelements, wobei das Bildsensorhalteelement zunächst ein Linsenhalterelement 205 aufweist, das zur Aufnahme des Bildsensors und/oder eines Bildsensorträgers (210) ausgebildet ist. Das Bildsensorhalteelement weist ferner ein Linsenträgerelement (Objektivbarrel) 215 auf, das ausgebildet ist, zumindest ein Objektivelement aufzunehmen, wobei das Linsenträgerelement (Objektivbarrel) 215 in dem Linsenhalterelement 205 angeordnet ist. Schließlich weist das Bildsensorhalteelement einen Kleb 235 auf, der in radialer Richtung zwischen dem Linsenhalterelement 205 und dem Linsenträgerelement (Objektivbarrel) 215 angeordnet ist, wobei der Kleb 235 eine zumindest teilweise wellenförmige Kontur auf einem Außenumfang des Linsenträgerelements (Objektivbarrels) 215 und/oder einem Innenumfang des Linsenhalterelements 205 aufweist.

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Es lassen sich mittels UV-Bestrahlung und/oder thermisch aushärtbare Klebstoffmaterialien verwenden, um ein Kameraobjektiv oder ein Objektivelement und einen Bildsensor während einer Ausrichtung einer Kameraeinheit starr miteinander zu verbinden. Problematisch sind jedoch auftretende Spannungen aufgrund unterschiedlicher Wärmeausdehnung in den geklebten Fügeteilen oder Spannungsindizierung durch das Aushärteverhalten des Kleb, wobei es für eine langzeitbeständige Klebung unerlässlich ist, diese Spannung so zu reduzieren, dass die Dauerhaltbarkeit unter Einsatzbedingungen gegeben ist.

### Offenbarung der Erfindung

Vor diesem Hintergrund werden mit dem hier vorgestellten Ansatz ein Bildsensorhalteelement, ein Verfahren zur Herstellung eines Bildsensorhalteelements, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterentwicklungen und Verbesserungen der im unabhängigen Anspruch angegebenen Vorrichtung möglich.

Das hier vorgestellte Bildsensorhalteelement basiert auf dem Ansatz, eine Verbindung zwischen einem Linsenhalterelement, zur Aufnahme eines Bildsensors, und eines Linsenträgerelements (beispielsweise als Objektivbarrel), zur Aufnahme eines Kameraobjektivs oder eines Objektivelements, unter Verwendung eines Klebs, der in radialer Richtung zwischen dem Linsenhalterelement und dem Linsenträgerelement (Objektivbarrel) angeordnet ist und eine zumindest teilweise wellenförmige Kontur aufweist, vorzunehmen.

Es wird ein Bildsensorhalteelement zur Halterung eines Bildsensors und eines Objektivelementes vorgestellt, wobei das Bildsensorhalteelement die folgenden Merkmale aufweist:
ein Linsenhalterelement, das zur Aufnahme des Bildsensors und/oder eines Bildsensorträgers ausgebildet ist;
ein Linsenträgerelement (beispielsweise als Objektivbarrel) das ausgebildet ist, zumindest ein Objektivelement aufzunehmen, wobei das Linsenträgerelement (Objektivbarrel) in dem Linsenhalterelement angeordnet ist; und
ein Kleb, der in radialer Richtung zwischen dem Linsenhalterelement und dem Linsenträgerelement (Objektivbarrel) angeordnet ist, wobei der Kleb zumindest teilweise eine Wellenform auf einem Außenumfang des Linsenträgerelements und/oder einem Innenumfang des Linsenhalterelements aufweist.

Bei einem Bildsensor kann es sich beispielsweise um eine Vorrichtung zur Aufnahme von zweidimensionalen Abbildern der Umwelt aus Licht auf elektrischem oder mechanischem Wege handeln. Hierbei werden in den meisten Fällen halbleiterbasierte Bildsensoren verwendet, die Licht bis ins mittlere Infrarot aufnehmen können. Unter einem Objektivelement kann beispielsweise ein sammelndes optisches System verstanden werden, das die wichtigste Komponente eines abbildenden optischen Geräts, wie beispielsweise einer Kameraeinheit, bildet. So kann ein Objektivelement eine reelle optische Abbildung eines Gegenstandes, also beispielsweise eines Objektes, einer Person und/oder eines Infrastrukturmerkmals, in einem Umfeld einer Kameraeinheit erzeugen, indem es ein Licht auf einen Bildsensor der Kameraeinheit leitet bzw. lenkt. Bei einem Linsenhalterelement kann es sich beispielsweise um eine innenseitig radialsymetrische Struktur handeln (Schnittstelle zum Objektivbarrel), die auf einem Schaltungsträger angeordnet werden kann (Schnittstelle zum Bildsensor ist an Bildsensorträgerstruktur angepasst), um ein Linsenträgerelement (Objektivbarrel) zur Aufnahme zumindest eines Objektivelements zu fassen bzw. sich mit diesem zu verbinden. Hierbei kann das Linsenhalterelement beispielsweise auch eine tragende Aufgabe zur Stützung oder zur Positionierung eines Objektivelements erfüllen. Bei einem Linsenträgerelement kann es sich beispielsweise um eine radialsymetrische Struktur handeln, die innerhalb eines Linsenhalterelements (Schnittstelle zum Linsenträgerelement ebenfalls radialsymetrisch) angeordnet werden kann, um ein Objektivelement aufzunehmen und die individuellen optischen Linsen und/oder ein Linsensystem des Objektivelements vor äußeren, schädigenden Einflüssen zu schützen, oder diese geometrisch korrekt zu positionieren. Hierbei kann das Linsenträgerelement (Objektivbarrel) eine verbindende Einheit zwischen dem optischen Linsensystem des Objektivelements und einer Kameraeinheit mit Bildsensor darstellen. Unter einem Kleb kann beispielsweise eine Substanz verstanden werden, die zum Verbinden verschiedener Bauteile und/oder Werkstoffe mittels Oberflächenhaftung verwendet wird. Zusätzlich zu der lastübertragenden Wirkung des Klebs können weitere Eigenschaften in die zu verbindenden Bauteile und/oder Werkstoffe, wie beispielsweise Schwingungsdämpfung, Abdichten gegen Flüssigkeiten und Gase, Ausgleich unterschiedlicher Fügeteildynamiken, Korrosionsschutz, thermische und elektrische Isolation oder Leitfähigkeit, integriert werden. Insbesondere dient die Klebverbindung dem Toleranz- und Positionierungsausgleich der beteiligten Fügepartner.

Beim Verbinden eines Bildsensors oder des Bildsensorträgers bzw. des Linsenhalterelementes mit einem Objektivelement mittels einer Radialklebkontur werden durch einen entstehenden Klebschrumpf sowie durch einen Ausdehnungsunterschied des Linsenträgerelements (Objektivbarrel) und des Linsenhalterelements in der Klebung mechanische Spannungen eingebracht. Diese Spannungen können durch unterschiedliche Arten von Einflüssen, beispielsweise Umweltbedingungen wie Temperatureinsatzbereich und Feuchtigkeit und/oder mechanische Belastungen und/oder chemische Einflüsse, wie Wasser und Lösemittel, die von außen auf die Klebung einwirken und den Kleb schrumpfen oder quellen lassen, ausgelöst und/oder verstärkt werden. So kann auch der Prozess einer UV-Vorhärtung und thermischen Aushärtung eines Klebs zu einem Klebschrumpf führen. Aus diesem Grund sollte der Kleb in der Lage sein, diese Spannungen aufzunehmen, da sich ansonsten die Klebung und/oder die geklebten Fügepartner, beispielsweise das Linsenträgerelement (Objektivbarrel) und das Linsenhalterelement, verformen könnten, wodurch eine Kameraeinheit in ihrer Funktionalität beeinträchtigt würde, bzw. könnte die Klebung versagen und somit die Funktionalität der Verbindung degradieren oder verloren gehen.

Die Vorteile des hier vorgestellten Bildsensorhalteelements bestehen somit insbesondere darin, dass durch eine wellenförmig ausgeformte Kontur eines Klebs, der in radialer Richtung zwischen einem Linsenhalterelement und einem Linsenträgerelement zum Verbinden eines Bildsensors mit einem Objektivelement angeordnet ist, eine mechanische Spannungsreduzierung trotz äußerer Umwelteinwirkungen, mechanischer Belastungen und/oder chemischer Einflüsse ermöglicht wird. Hierbei kann sowohl ein Klebschrumpf, ein Quellverhalten des Klebs sowie auch ein radialer Spannungsanteil, der auf den Kleb, das Linsenhalterelement und das Linsenträgerelement wirkt, reduziert werden, wodurch einer eventuellen Verformung des Linsenträgerelements und des Linsenhalterelements konstruktiv entgegengewirkt wird. Alternativ könnten diese Verformungsbereiche aber auch gezielt ausgewählt werden. Ferner kann durch eine wellenförmig ausgeformte Kontur oder eine Wellenform eines Klebs, der in radialer Richtung zwischen dem Linsenhalterelement und dem Linsenträgerelement angeordnet ist, eine optimale Abdichtung der Schnittstelle zwischen Objektivelement und Bildsensor realisiert werden.

Gemäß einer Ausführungsform kann das Linsenhalterelement (Schnittstelle zum Objektivbarrel) als ein umlaufender Ring ausgeformt sein, wobei das Linsenhalterelement hierbei insbesondere eine radialsymetrische Kontur oder Form aufweist (die Form ist an den Fügepartner Objektivbarrel angepasst). Eine solche Ausführungsform des hier vorgestellten Ansatzes bietet den Vorteil, dass das Objektivelement bzw. das Linsenträgerelement (Objektivbarrel) zur Aufnahme des Objektivelements ebenfalls radialsymetrisch ausgeformt ist, sodass das sich Linsenträgerelement, mit dem aufgenommenen Objektivelement, formschlüssig (günstigerweise aber mit vorgesehenem Klebespalt, der den Toleranzausgleich und den Mindestklebespalt abbilden kann) mit dem Linsenhalterelement verbinden und fixieren lässt, um eine optimale arbeitende Kameraeinheit zu fertigen, bei der der Bildsensor optimal zur Abbildungsebene des Objektivs ausgerichtet ist.

Gemäß einer weiteren Ausführungsform kann der Kleb durchgehend oder umlaufend auf einem Innenumfang des Linsenhalterelements angeordnet sein, insbesondere wobei der Kleb als Klebstoffraupe ausgeformt ist. Hierbei trägt beispielsweise ein Industrieroboter mit einem Verstellarm, an welchem eine Klebdüse und entsprechende Zuführeinrichtungen für den Kleb vorgesehen sind, den Kleb durchgehend auf den Innenumfang des Linsenhalterelements auf (Schnittstelle zum Objektivbarrel). Mittels der endseitigen Kleberdüse kann der Kleb in Form der so genannten Klebstoffraupe auf die zusammenzubringenden und gegeneinander abzudichtenden Werkstücke, beispielsweise das Linsenhalterelement und das Linsenträgerelement (Objektivbarrel), aufgetragen werden. Die Klebstoffraupe kann hierbei beispielsweise eine runde, dreieckige, viereckige, ovale oder sternenförmige Querschnittsfläche aufweisen. Eine solche Ausführungsform des hier vorgestellten Ansatzes bietet somit den Vorteil, dass mittels einer durchgehend aufgetragenen Klebstoffraupe auftretende Teiletoleranzen, Spalten und/oder Lücken zwischen dem Linsenhalterelement und dem Linsenträgerelement (Objektivbarrel) optimal überbrückt und/oder abgedichtet werden können.

Ferner kann das Linsenhalterelement gemäß einer Ausführungsform an einen Bildsensorträger zum Aufnehmen des Bildsensors geklebt und/oder geschweißt sein. Eine solche Ausführungsform des hier vorgestellten Ansatzes bietet den Vorteil, dass mittels einer Klebeverbindung die Fügeteile, also der Bildsensorträger und das Linsenhalterelement, keinen hohen Temperaturen ausgesetzt werden. So können ferner mittels einer Klebeverbindung beispielsweise unterschiedliche Werkstoffe miteinander verbunden werden. Eine Klebverbindung kann zudem gleichzeitig als Dichtung wirken und ist oftmals kostengünstiger gegenüber anderen Fügungsverfahren realisierbar. Auch mittels einer Lötverbindung können unterschiedliche Werkstoffe miteinander verbunden werden. Zudem weist eine Lötverbindung eine dauerhaft dichte Verbindung auf. Ferner weist eine Lötverbindung sowohl eine gute Wärmeleitfähigkeit sowie auch eine gute elektrische Leitfähigkeit auf.

Gemäß einer Ausführungsform kann das Linsenhalterelement (beispielsweise radial) federnd oder zumindest teilweise radial federnd ausgestaltet sein, insbesondere wenn das Linsenhalterelement hervorstehende Finger aufweist. Eine solche Ausführungsform des hier vorgestellten Ansatzes bietet den Vorteil, dass somit die durch einen Klebeschrumpf und/oder ein Quellverhalten des Klebs entstehenden Spannungen durch die radial federnde Ausgestaltung des Linsenhalterelements aufgenommen und somit teilweise kompensiert bzw. reduziert werden können. So kann auch eine Federwirkung der hervorstehenden Finger des Linsenhalterelements vorteilhaft zur weiteren Spannungsreduzierung genutzt werden.

Gemäß einer weiteren Ausführungsform kann der Kleb einen (beispielsweise radial) federnden Teil des Linsenhalterelementes, insbesondere einen der hervorstehenden Finger des Linsenhalterelements das Linsenträgerelement (Objektivbarrel) kontaktieren. Eine solche Ausführungsform des hier vorgestellten Ansatzes bietet den Vorteil, dass mittels einer Kontaktierung des Klebs an den hervorstehenden Fingern des Linsenhalterelements eine Verzahnung bzw. ein Ineinandergreifen beider Komponenten möglich ist, sodass das Linsenhalterelement formschlüssig mit dem Linsenträgerelement (Objektivbarrel) verbunden werden kann, um eine optimal arbeitende Kameraeinheit zu fertigen.

Weiterhin kann der Kleb gemäß einer Ausführungsform an einer Außenkontur des einen (beispielsweise radial) federnden Teil des Linsenhalterelements, insbesondere dem Finger des Linsenhalterelements angeordnet sein, insbesondere wobei eine Form des einen federnden Teil des Linsenhalterelements oder der Finger des Linsenhalterelements der Wellenform oder Wellenkontur des Klebs entspricht. Hierbei kann eine Form der Finger und/oder eine Wellenkontur des Klebs beispielsweise gestaucht werden, um eine fingerartigere Ausführung zu erreichen. Eine solche Ausführungsform des hier vorgestellten Ansatzes bietet den Vorteil, dass mittels einer Stauchung der Form der Finger und/oder der Wellenkontur des Klebs eine vergrößerte Verbindungsfläche zwischen dem Linsenhalterelement und dem Linsenträgerelement erreicht werden kann, wobei eine Verteilung der Spannung auf diese vergrößerte Verbindungsfläche eine verringerte mechanische Last auf das Linsenhalterelement und das Linsenträgerelement (Objektivbarrel) ermöglicht. Die Vergößerung der Klebverbindungsfläche reduziert die Flächenspannung in der Kontaktfläche. Verbleibende Restspannungen, die beispielsweise durch ein Aushärten des Klebs und äußere Umgebungsbedingungen in die Schnittstellen zwischen und/oder die Fügepartner selbst eingeleitet werden, können je nach Stauchung der Form der Finger und/oder der Wellenkontur über eine deutlich vergrößerte Fläche verteilt werden.

Ferner können mittels einer Stauchung der Form der Finger und/oder der Wellenkontur des Klebs vorteilhaft verbesserte Belichtungsbedingungen erreicht werden, da hierdurch eine verlängerte lichtzugängliche Konturgrenze geschaffen wurde. Gegenüber einem rein radial zwischen dem Linsenhalterelement und dem Linsenträgerelement ausgeführten Kleb ist die Wellenkontur für eine Aushärtung des Klebs mittels UV-Bestrahlung nicht nur axial erreichbar. Es ergeben sich tangentiale Belichtungsmöglichkeiten, die eine Länge der Verbindung deutlich erhöhen können. So kann ein Klebschrumpf, der beispielsweise durch eine UV-Vorhärtung und thermische Aushärtung und/oder eine Quellung des Klebs durch Temperatur- und Feuchteinflüsse hervorrufbar ist, lokal zweiachsig in eine radiale und tangentiale Richtung erfolgen.

Es wird eine Kameraeinheit zur Erfassung einer Umgebung vorgestellt, wobei die Kameraeinheit einen Bildsensor, ein Objektivelement und das Bildsensorhalteelement aufweist. Bei einer Kameraeinheit kann es sich beispielsweise um eine fototechnische Apparatur handeln, die statische oder bewegte Bilder elektronisch auf ein magnetisches Videoband oder digitales Speichermedium aufzeichnet, oder über eine Schnittstelle übermitteln kann. Hierbei kann es sich bei der Kameraeinheit beispielsweise um eine digitale Fahrzeugkamera handeln, die beispielsweise an einem Fahrzeug angeordnet ist und ferner dazu ausgebildet ist, fortlaufend Bildinformationen oder Bilder eines Fahrzeugumfelds und der dort befindlichen Personen, Objekte und/oder Infrastrukturmerkmale zu erfassen, abzubilden oder weiter zu verarbeiten. Alternativ kann es sich bei der Kameraeinheit um eine Überwachungskamera handeln, die zur Beobachtung eines oder mehrerer Überwachungsbereiche verwendet werden. So kann beispielsweise ein sich im Überwachungsbereich befindliches auffälliges Objekt, beispielsweise eine Person oder ein Fahrzeug, von der Überwachungskamera verfolgt werden.

Es wird ein Verfahren zur Herstellung eines Bildsensorhaltelements vorgestellt, wobei das Verfahren die folgenden Schritte aufweist:
Bereitstellen eines Linsenhalterelements und eines Linsenträgerelements (beispielsweise als Objektivbarrel bzw. Objektiv);
Auftragen eines Klebs zumindest teilweise in Wellenform oder mit wellenförmiger Kontur an einem Außenumfang des Linsenträgerelements (Objektivbarrel) und/oder einem Innenumfang des Linsenhalterelements, insbesondere im Bereich der Schnittstelle Linsenhalter- und Linsenträgerelement (Objektivbarrel); und
Verbinden des Linsenhalterelements mit dem Linsenträgerelement (Objektivbarrel), wobei ein Aussenradius einer Radialkontur des Linsenträgerelements (Objektivbarrel) kleiner ist als ein Innenradius der Kontur des Linsenhalterelements, sodass der Kleb in radialer Richtung zwischen einer Außenseite des Linsenträgerelements und einer Innenseite des Linsenhalterelements angeordnet wird, um das Bildsensorhalteelement herzustellen.

Gemäß einer Ausführungsform kann der Schritt des Bereitstellens, der Schritt des Auftragens und/oder der Schritt des Verbindens wiederholt ausgeführt werden, wobei bei einem wiederholt ausgeführten Schritt des Auftragens der Kleb in einer anderen wellenförmigen Kontur aufgetragen wird, als in einem vorangegangenen Schritt des Auftragens. Eine solche Ausführungsform des hier vorgestellten Ansatzes bietet den Vorteil, dass eine Form und Geometrie der Wellenkontur des Klebs produktionspezifisch wählbar ist und somit ein hohes Maß an Flexibilität gewährt wird.

Gemäß einer weiteren Ausführungsform kann das Verfahren einen Schritt des Aushärtens aufweisen, bei dem der Kleb thermisch, elektrisch, chemisch und/oder mittels Licht, insbesondere UV-Licht und/oder Laserlicht, teilausgehärtet oder ausgehärtet wird. Eine solche Ausführungsform des hier vorgestellten Ansatzes bietet den Vorteil, dass Kleb, der mittels Bestrahlung mit speziellen UV-Lichtquellen polymerisiert und dadurch aushärtet, vor allem im industriellen Bereich eingesetzt werden kann, da er innerhalb von Sekunden aushärtet und somit die Fertigung in Anlagen mit hohen Taktzeiten ermöglicht. Kleb, der thermisch bei Raumtemperatur oder Erhitzung aushärtet, kann ebenfalls vor allem im industriellen Bereich eingesetzt werden und kann insbesondere dann eingesetzt werden, wenn die zu verklebenden Fügepartner, beispielsweise ein Linsenhalterelement und ein Linsenträgerelement, nicht hitzeempfindlich oder nicht transparent ausgeformt sind und der Kleb somit nicht mittels Licht oder UV-Licht ausgehärtet werden kann. Der Kleb kann beispielhaft auch dual härtend ausgeführt sein, wobei eine Anfangsfestigkeit des Klebs mittels Bestrahlung mit Licht oder UV-Licht erreicht wird und Schattenzonen und/oder tiefer liegende Klebschichten schließlich thermisch durch Hitzeeinwirkung nachgehärtet werden.

Für Kleb, der elektrisch ausgehärtet wird, ergibt sich beispielsweise der Vorteil, dass der Kleb eine geringe Viskosität aufweist, sodass damit sehr gut Oberflächen beschichtet und Fügepartner exakt in Position gebracht werden können, bevor man die Klebung fixiert. Somit eignet sich dieser Ansatz insbesondere zur Anwendung während einer Ausrichtung einer Kameraeinheit. Die entstehenden Klebeverbindungen bleiben hierbei flexibel und können hohen Scherkräften widerstehen.

Alternativ kann auch der Kleb mittels chemischer Reaktionsvorgänge ausgehärtet werden.

Das hier vorgestellte Verfahren zur Herstellung eines Bildsensorhalteelements kann beispielsweise in Software oder Hardware oder in einer Mischform aus Software und Hardware beispielsweise in einem Steuergerät implementiert sein. Der hier vorgestellte Ansatz schafft ferner eine Vorrichtung, die ausgebildet ist, um die Schritte einer Variante eines hier vorgestellten Verfahrens zur Herstellung eines Bildsensorhalteelements in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Ansicht einer Kameraeinheit zur Erfassung eines Umfelds gemäß einem Ausführungsbeispiel;
Fig. 2 eine schematische Längsschnittansicht eines Bildsensorhalteelements zur Halterung eines Bildsensors oder eines Bildsensorträgers und eines Objektivelements gemäß einem Ausführungsbeispiel, wobei eine Radialklebung mit einer nicht wellenförmigen Klebkontur abgebildet ist;
Fig. 3 eine schematische Längsschnittansicht eines Bildsensorhalteelements zur Halterung eines Bildsensors oder eines Bildsensorträgers und eines Objektivelements gemäß einem Ausführungsbeispiel, wobei eine Axialklebung dargestellt ist;
Fig. 4 eine schematische Ansicht eines Verbindungsbereichs zwischen einem Linsenträgerelement und einem Linsenhalterelement gemäß einem Ausführungsbeispiel, wobei eine nicht-wellenförmige Klebanordnung dargestellt ist;
Fig. 5 eine schematische Längsschnittansicht eines Bildsensorhalteelements zur Halterung eines Bildsensors oder eines Bildsensorträgers und eines Objektivelements gemäß einem Ausführungsbeispiel, wobei eine wellenförmige Klebkontur dargestellt ist;
Fig. 6 eine schematische Ansicht eines Verbindungsbereichs zwischen einem Linsenträgerelement und einem Linsenhalterelement gemäß einem Ausführungsbeispiel, wobei eine wellenförmige Klebkontur dargestellt ist;
Fig. 7 ein Blockschaltbild einer Vorrichtung zur Herstellung eines Bildsensorhalteelements gemäß einem Ausführungsbeispiel; und
Fig. 8 ein Ablaufdiagramm eines Ausführungsbeispiels eines Verfahrens zur Herstellung eines Bildsensorhalteelements gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

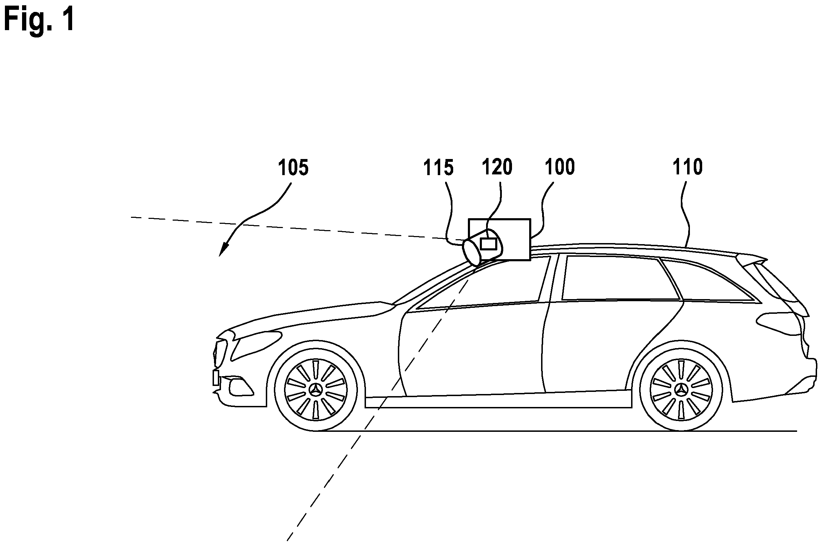

Fig. 1 zeigt eine schematische Ansicht einer Kameraeinheit 100 zur Erfassung eines Umfelds 105 im Erfassungsbereich der Kameraeinheit gemäß einem Ausführungsbeispiel. Die Kameraeinheit 100 ist hierbei gemäß einem Ausführungsbeispiel auf einem Fahrzeug 110 angeordnet und weist beispielhaft ein Objektivelement 115 und einen Bildsensor 120 auf.
So wird die hier dargestellte Kameraeinheit 100 beispielhaft als Teil eines Fahrerassistenzsystems zur Umfelderfassung des Fahrzeugs 110 verwendet. Hierbei können sich in dem Umfeld 105 des Fahrzeugs 110 beispielsweise Personen, Objekte und/oder Infrastrukturmerkmale befinden, die beispielsweise mittels der Kameraeinheit 100 erfasst und abgebildet werden können, um eventuelle Unfälle zu vermeiden und ein sicheres Fahren des Fahrzeugs 110 zu garantieren. Entsprechend sind für die Kameraeinheit 100 Bauformen mit annähernd kubischer Auslegung und Kantenlängen kleiner 25mm angestrebt. Das gilt speziell für NRCS Systeme aber nicht für Front-Video-Systeme, die im Fahrgastraum verbaut sind. Alternativ kann die Kameraeinheit 100 auch als Überwachungskameraeinheit zur Beobachtung eines oder mehrerer Überwachungsbereiche verwendet werden. Hierbei wird ein sich im Überwachungsbereich befindliches auffälliges Objekt, beispielsweise eine Person oder ein Fahrzeug, von der Überwachungskamera verfolgt.

Die optischen Module der Kameraeinheit 100 werden typischerweise mittels sogenannter aktiver Ausrichtungsverfahren gefertigt. Dabei wird eine Ausrichtung des Objektivelements 115 zum Bildsensor 120 oder des Bildsensors 120 zum Objektivelement 115 auf der Basis der vom Sensorchip der Kameraeinheit 100 unter Verwendung einer Mehrzahl wiederholt aufgenommener Videodaten durchgeführt, um die beste Position für die korrekte Fokussierung und die Blickrichtungsachse der Kameraeinheit 100 zu erreichen.

Bei einer aktiven Ausrichtung der Kameraeinheit 100 kann ferner die Bildfokuskalotte eines Linsensystems, also das Objektivelement 115, mittels mechanischer Mehrachsenkorrektur in die Bildsensorebene gebracht und in dieser Position fixiert werden. Die Ausrichtungskorrektur wird hierbei aktiv mittels Signalauswertung der lichtempfindlichen Sensorebene überprüft. Das Verfahren korrigiert Objektivtoleranzen, Ausrichtungsfehler und/oder Ausrichtungsabweichungen, sowie die Fokuslage, die durch Komponententoleranzen und deren Toleranzketten im Aufbauprozess entstehen. Dieser Prozess bedingt aufwendige mechanische Korrektursysteme und ist zeitintensiv, da die Sensorsignale zur Korrektursteuerung ausgewertet werden müssen.

Bei einer passiven Ausrichtung einer Kameraeinheit 100 erfolgt die Positionierung des Objektivelements 115 anhand mechanischer Merkmale, die zueinander positioniert werden, ohne den Bildsensor 120 aktiv zu betreiben. Hierbei können die Toleranzen der verschiedenen mechanischen Merkmale allerdings nicht ausgeglichen werden.

Eine typische Konstellation zur Fertigung einer Kameraeinheit 100 ist eine Verklebung der in einer ersten Näherung zylindrischen bzw. radialsymetrischen Außenkontur eines Linsenträgerelements (Objektivbarrel) zur Aufnahme eines Objektivelements 115 mit der an der Schnittstelle ebenfalls zylindrischen bzw. radialsymetrischen Kontur eines Linsenhalterelements zur Aufnahme eines Bildsensors 120. Das Linsenhalterelement realisiert somit eine bauteilgerechte Anbindung an das ebenfalls zylindrisch ausgeformte Linsenträgerelement (Objektivbarrel) sowie eine bauteilgerechte Anbindung an den Bildsensorträger (d. h., die Schnittstelle ist Sensorträger-getrieben), der eben, rechteckig oder quadratisch und in einer Ebene senkrecht zur optischen Achse des Linsenträgerelements bzw. des Objektivelements 115 angeordnet ist. Die Verbindung des Linsenträgerelements (Objektivbarrel) mit dem Linsenhalterelement, wobei das Linsenträgerelement (Objektivbarrel) in dem Linsenhalterelement angeordnet ist, erfolgt hierbei mittels einer Radialklebung oder mittels einer axialen Klebung.

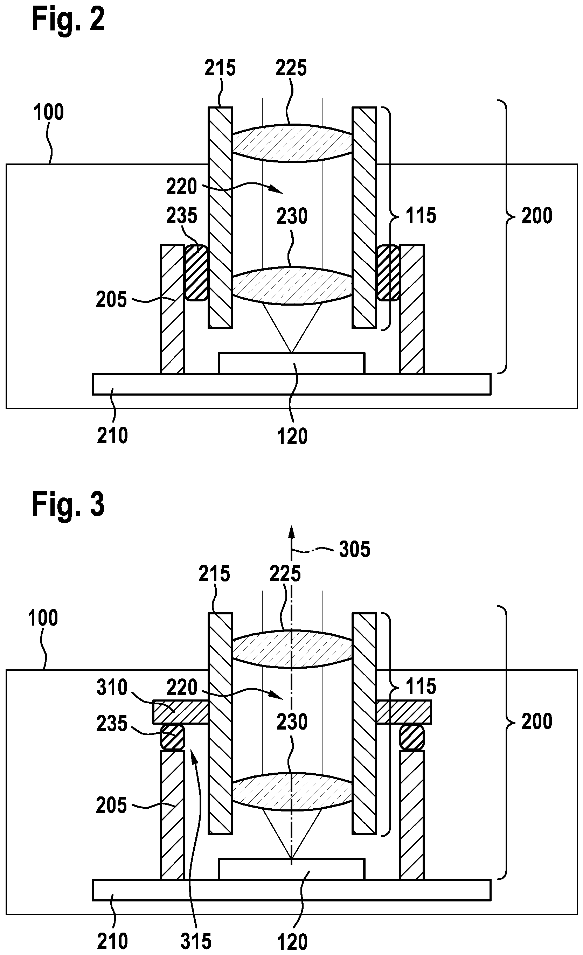

Fig. 2 zeigt eine schematische Längsschnittansicht eines Bildsensorhalteelements 200 zur Halterung eines Bildsensors 120 und eines Objektivelements 115 gemäß einem Ausführungsbeispiel.

Das Bildsensorhalteelement 200 ist gemäß einem Ausführungsbeispiel in einer Kameraeinheit 100 zur Erfassung eines Umfelds angeordnet. So weist das Bildsensorhalteelement 200 beispielhaft ein Linsenhalterelement 205 auf, wobei das Linsenhalterelement 205 ausgebildet ist, den Bildsensor 120 und/oder einen Bildsensorträger 210 aufzunehmen. Der Bildsensor 120 und das Linsenhalterelement 205 sind hierbei beispielhaft auf dem Bildsensorträger 210 angeordnet, wobei der Bildsensor 120 und das Linsenhalterelement 205 auf den Bildsensorträger 210 geklebt und/oder geschweißt sind. Das Bildsensorhalteelement 200 weist ferner ein Linsenträgerelement (Objektivbarrel) 215 auf das ausgebildet ist, das Objektivelement 115 aufzunehmen. Das Objektivelement 115 ist unterdies ausgebildet, einfallendes Licht 220 auf den Bildsensor 120 zu leiten und weist beispielhaft optische Linsen 225 und 230 auf (real sind Linsensysteme in unterschiedlichsten Anordnungen) die auf dem Sensor die Umwelt abbilden.

Das Linsenträgerelement (Objektivbarrel) 215 und das Linsenhalterelement 205 sind beispielhaft je als Zylinder ausgeformt (real werden aus fertigungstechnischen Gründen radialsymetrische Objektivbarrel bevorzugt und somit auch radialsymetrische Linsenhalterelemente an dieser Schnittstelle). Gemäß einem Ausführungsbeispiel ist das Linsenträgerelement 215 in dem Linsenhalterelement 205 angeordnet, wobei der Radius des Linsenträgerelements 215 kleiner ist als der Radius des Linsenhalterelements 205, sodass das Linsenträgerelement 215 in das Linsenhalterelement 205 einbringbar ist. Gemäß einem Ausführungsbeispiel sind das Linsenträgerelement 215 und das Linsenhalterelement 205 formschlüssig verbunden, was in der Figur 2 nicht explizit dargestellt ist.

Schließlich weist das Bildsensorhalteelement 200 einen Kleb 235 auf, der in radialer Richtung zwischen dem Linsenhalterelement 205 und dem Linsenträgerelement 215 angeordnet ist, um diese beiden Komponenten formschlüssig zu verbinden, wobei der Kleb 235 auf einem Außenumfang des Linsenträgerelements 215 und/oder einem Innenumfang des Linsenhalterelements 205 angeordnet ist. Das Endergebnis ist ein Formschluss. Der Kleb wird aber genau dazu verwendet die gewollte "Spielpassung", die den Toleranzausgleich und die Mindestklebschichtdicke abbildet zu schließen.

Fig. 3 zeigt eine schematische Längsschnittansicht eines Bildsensorhalteelements 200 zur Halterung eines Bildsensors 120 und eines Objektivelements 115 gemäß einem Ausführungsbeispiel.

Das Bildsensorhalteelement 200 ist gemäß einem Ausführungsbeispiel in einer Kameraeinheit 100 zur Erfassung eines Umfelds angeordnet. So weist das Bildsensorhalteelement 200 beispielhaft ein Linsenhalterelement 205 auf, wobei das Linsenhalterelement 205 ausgebildet ist, den Bildsensor 120 aufzunehmen. Der Bildsensor 120 und das Linsenhalterelement 205 sind hierbei beispielhaft auf einem Bildsensorträger 210 angeordnet, wobei der Bildsensor 120 und das Linsenhalterelement 205 auf den Bildsensorträger 210 geklebt und/oder geschweißt sind. Das Bildsensorhalteelement 200 weist ferner ein Linsenträgerelement (Objektivbarrel) 215 auf das ausgebildet ist, das Objektivelement 115 aufzunehmen. Das Objektivelement 115 ist unterdies ausgebildet ein Licht 220 auf den Bildsensor 120 zu leiten und weist beispielhaft zwei optische Linsen 225 und 230 auf, die mögliche perspektivische Fehler in der Abbildung eines Umfelds der Kameraeinheit 100 korrigieren.

Das Linsenträgerelement 215 und das Linsenhalterelement 205 sind beispielhaft je als ein kreisrunder Zylinder ausgeformt. Gemäß einem Ausführungsbeispiel ist das Linsenträgerelement 215 in dem Linsenhalterelement 205 angeordnet, wobei ein Radius des Linsenträgerelements 215 kleiner ist als ein Radius des Linsenhalterelements 205, sodass das Linsenträgerelement 215 in das Linsenhalterelement 205 einbringbar ist. Gemäß einem Ausführungsbeispiel sind das Linsenträgerelement 215 und das Linsenhalterelement formschlüssig verbunden Im Unterschied zu dem in Fig. 2 gezeigten Bildsensorhalteelement 200 weist das Linsenträgerelement 215 hierbei einen radial zur Objektivelements-Längsachse 305 ausgerichteten Kreisring 310 auf, wobei der Kreisring 310 das zylindrisch ausgeformte Linsenträgerelement 215 durchgehend umschließt. Hierbei überdeckt eine Fläche des Kreisrings 310 das Linsenhalterelement 205 vollständig, wobei zwischen dem Kreisring 310 und dem Linsenhalterelement 205 ein Spalt 315 ausgeformt ist. Eine solche Form entspricht einer Axialklebung.

Schließlich weist das Bildsensorhalteelement 200 einen Kleb 235 auf, der in axialer Richtung in den Spalt 315 zwischen einem dem Bildsensorträger 210 abgewandten Ende des Linsenhalterelements 205 und einer dem Bildsensorträger 210 zugewandten Seite des Kreisrings 310 des Linsenträgerelement 215 angeordnet ist, um diese beiden Komponenten zu verbinden.

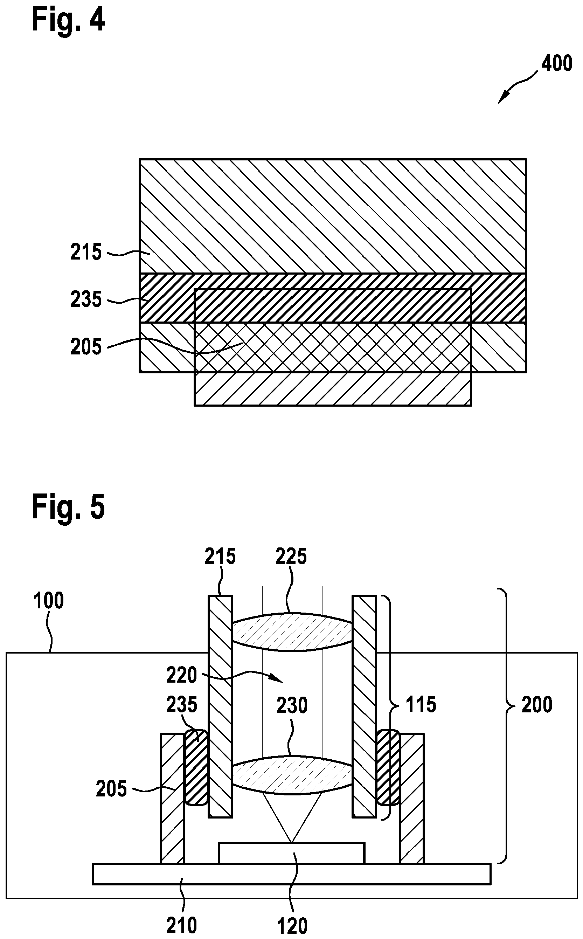

Fig. 4 zeigt eine schematische Ansicht der Schnittstellenabwicklung des radialen Schnittstellenbereiches der Klebung eines Verbindungsbereichs 400 zwischen einem Linsenträgerelement 215 und einem Linsenhalterelement 205 gemäß einem Ausführungsbeispiel. Hierbei handelt es sich bei der schematischen Ansicht des Verbindungsbereichs 400 um eine Detailansicht des Verbindungsbereichs 400, wobei lediglich das Linsenträgerelement 205, das Linsenhalterelement 205 und der Kleb 235 dargestellt sind. Das Linsenhalterelement 205 ist beispielhaft teiltransparent dargestellt. Die Figur dient der Darstellung der nicht wellenförmigen Radialklebung in der Schnittstelle.

Ein Radius des zylindrisch ausgeformten Linsenträgerelements 215 ist kleiner als ein Radius des ebenfalls zylindrisch ausgeformten Linsenhalterelements 205 ausgestaltet, sodass das Linsenträgerelement 215 in dem Linsenhalterelement 205 anordenbar ist. Ein Verbinden des Linsenhalterelements 205 mit dem Linsenträgerelement 215 wird gemäß einem Ausführungsbeispiel mittels des Klebs 235 realisiert, wobei der Kleb 235 in radialer Richtung zwischen einer Außenseite des Linsenträgerelements 215 und einer Innenseite des Linsenhalterelements 205 angeordnet ist. Der Kleb 235 ist hierbei beispielhaft durchgehend auf einem Innenumfang des Linsenhalterelements 205 angeordnet und als eine Klebstoffraupe ausgeformt. Die Klebstoffraupe weist gemäß einem Ausführungsbeispiel eine viereckige Querschnittsform auf (im Endergebnis, die Kontur ergibt sich immer aus der geometrischen Anordnung der positionsausgerichteten Fügepartner, der Kleb "füllt" diesen Spalt nur), wobei durch diese Ausformung eine besonders effektive Überbrückung und Abdichtung von Spalten zwischen dem Linsenträgerelement 215 und dem Linsenhalterelement 205 im Millimeterbereich möglich ist. Zum Fixieren der Verbindung zwischen dem Linsenträgerelement 215 und dem Linsenhalterelement 205 ist der Kleb 235 anschließend thermisch, elektrisch, chemisch und/oder mittels Licht aushärtbar oder anderweitig aushärtbar.

Fig. 5 zeigt eine schematische Längsschnittansicht eines Bildsensorhalteelements 200 zur Halterung eines Bildsensors 120 und eines Objektivelements 115 gemäß einem Ausführungsbeispiel mit wellenförmiger Klebkontur. Hierbei wird wider auf die vorstehenden Ausführungen in Bezug auf die wellenförmige Klebkontur verwiesen.

Das Bildsensorhalteelement 200 ist gemäß einem Ausführungsbeispiel in einer Kameraeinheit 100 zur Erfassung eines Umfelds angeordnet. So weist das Bildsensorhalteelement 200 beispielhaft ein Linsenhalterelement 205 auf, wobei das Linsenhalterelement 205 ausgebildet ist, den Bildsensor 120 aufzunehmen. Der Bildsensor 120 und das Linsenhalterelement 205 sind hierbei beispielhaft auf einem Bildsensorträger 210 angeordnet, wobei der Bildsensor 120 und das Linsenhalterelement 205 auf den Bildsensorträger 210 geklebt und/oder geschweißt sind. Das Bildsensorhalteelement 200 weist ferner ein Linsenträgerelement 215 auf das ausgebildet ist, das Objektivelement 115 aufzunehmen. Das Objektivelement 115 ist unterdies ausgebildet, ein Licht 220 auf den Bildsensor 120 zu leiten und weist beispielhaft zwei optische Linsen 225 und 230 auf, die mögliche perspektivische Fehler in der Abbildung eines Umfelds der Kameraeinheit 100 korrigieren.

Das Linsenträgerelement 215 und das Linsenhalterelement 205 sind beispielhaft je als ein kreisrunder Zylinder ausgeformt. Gemäß einem Ausführungsbeispiel ist das Linsenträgerelement 215 in dem Linsenhalterelement 205 angeordnet, wobei ein Radius des Linsenträgerelements 215 kleiner ist als ein Radius des Linsenhalterelements 205, sodass das Linsenträgerelement 215 in das Linsenhalterelement 205 einbringbar ist. Gemäß einem Ausführungsbeispiel sind das Linsenträgerelement 215 und das Linsenhalterelement formschlüssig verbunden.

Schließlich weist das Bildsensorhalteelement 200 einen Kleb 235 auf, der in radialer Richtung zwischen dem Linsenhalterelement 205 und dem Linsenträgerelement 215 angeordnet ist, um diese beiden Komponenten formschlüssig zu verbinden. Hierbei weist der Kleb 235 eine zumindest teilweise wellenförmige Kontur auf einem Außenumfang des Linsenträgerelements 215 und/oder einem Innenumfang des Linsenhalterelements 205 auf. So wird in der Darstellung deutlich, dass mittels der wellenförmigen Kontur des Klebs 235 eine vergrößerte Verbindungsfläche zwischen dem Linsenhalterelement 205 und dem Linsenträgerelement 215 geschaffen ist, wobei eine Verteilung einer mechanischen Spannung auf diese vergrößerte Verbindungsfläche eine verringerte mechanische Last auf das Linsenhalterelement 205 und das Linsenträgerelement 215 ermöglicht.

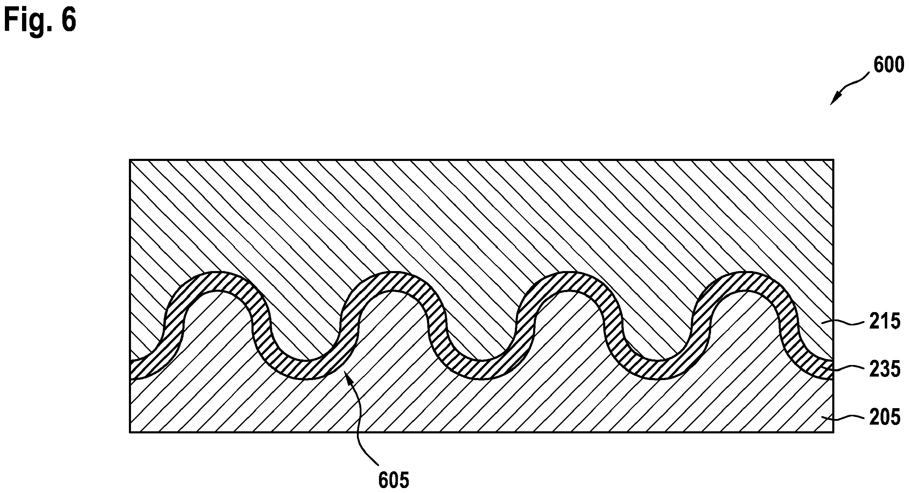

Fig. 6 zeigt eine schematische Ansicht eines Verbindungsbereichs 600 zwischen einem Linsenträgerelement 215 und einem Linsenhalterelement 205 gemäß einem Ausführungsbeispiel mit wellenförmiger Klebkontur. Hierbei handelt es sich bei der schematischen Ansicht des Verbindungsbereichs 600 um eine Detailansicht des Verbindungsbereichs 600, wobei lediglich das Linsenträgerelement 215, das Linsenhalterelement 205 und der Kleb 235 dargestellt sind. Das Linsenhalterelement 205 ist beispielhaft teiltransparent dargestellt. Die Ausführungen zur Figur 4 gelten analog ebenfalls auf für das in der Figur 6 dargestellte Ausführungebeispiel.

Ein Radius des zylindrisch ausgeformten Linsenträgerelements 215 ist kleiner als ein Radius des ebenfalls zylindrisch ausgeformten Linsenhalterelements 205, sodass das Linsenträgerelement 215 in dem Linsenhalterelement 205 anordenbar ist. Ein Verbinden des Linsenhalterelements 205 mit dem Linsenträgerelement 215 wird gemäß einem Ausführungsbeispiel mittels des Klebs 235 realisiert, wobei der Kleb 235 in radialer Richtung zwischen dem Linsenhalterelement 205 und dem Linsenträgerelement 215 angeordnet ist. Hierbei weist der Kleb 235 ferner eine beispielhaft wellenförmige Kontur auf einem Außenumfang des Linsenträgerelements 215 und/oder einem Innenumfang des Linsenhalterelements 205 auf. Die wellenförmige Kontur des Klebs 235 ist beispielhaft halbkreisförmig ausgeformt. Der Kleb 235 ist durchgehend auf einem Innenumfang des Linsenhalterelements 205 angeordnet und als eine Klebstoffraupe ausgeformt. Zum Fixieren der Verbindung zwischen dem Linsenträgerelement 215 und dem Linsenhalterelement 205 ist der Kleb 235 anschließend thermisch, elektrisch und/oder mittels Licht aushärtbar.

Gemäß einem Ausführungsbeispiel ist das Linsenhalterelement 205 federnd ausgestaltet und weist eine Mehrzahl hervorstehender Finger 605 auf. Der Kleb 235 kontaktiert hierbei die hervorstehenden Finger 605 des Linsenhalterelements 205, wobei der Kleb 235 an einer Außenkontur der Finger 605 des Linsenhalterelements 205 angeordnet ist. Eine Form der Finger 605 des Linsenhalterelements 205 entspricht dabei vorteilhaft der wellenförmigen Kontur des Klebs 235, wobei sowohl die Finger 605 des Linsenhalterelements 205 als auch die wellenförmige Kontur des Klebs 235 halbkreisförmig ausgeformt sind und somit optimal ineinandergreifen und/oder verzahnen. Alternativ kann die Form der Finger 605 des Linsenhalterelements 205 und die wellenförmige Kontur des Klebs 235 gestaucht ausgeführt sein, sodass eine fingerartige Ausformung der Finger 605 des Klebs 235 realisiert wird, wodurch eine vergrößerte Verbindungsfläche zwischen dem Linsenhalterelement 205 und dem Linsenträgerelement 215 erreicht werden kann. Mittels einer Stauchung der Form der Finger 605 und/oder der wellenförmigen Kontur des Klebs 235 ist ebenso eine verlängerte lichtzugängliche Konturgrenze des Klebs 235 realisierbar, wodurch verbesserte Belichtungsbedingungen des Klebs 235 erreicht werden können.

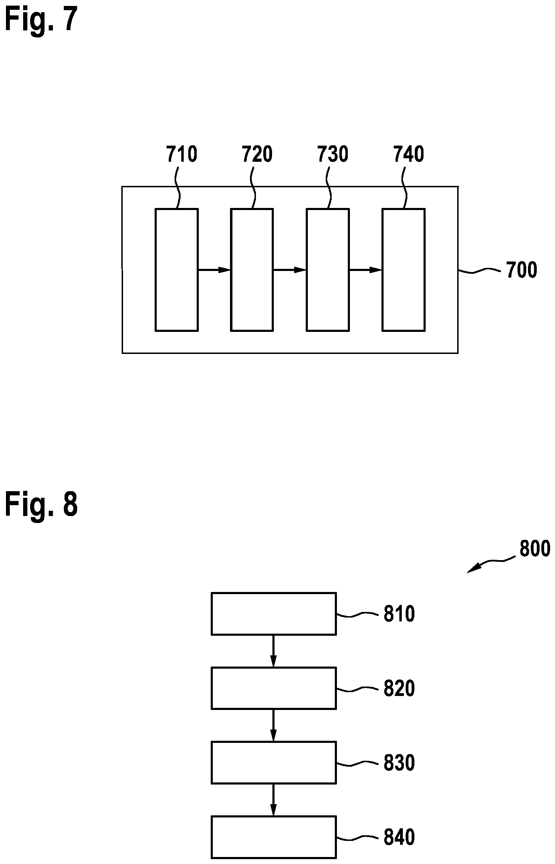

Fig. 7 zeigt ein Blockschaltbild einer Vorrichtung 700 zur Herstellung eines Bildsensorhalteelements gemäß einem Ausführungsbeispiel. Hierbei weist die Vorrichtung 700 gemäß einem Ausführungsbeispiel eine Bereitstelleinrichtung 710, eine Auftragseinrichtung 720, eine Verbindungseinrichtung 730 sowie eine Aushärtungseinrichtung 740 auf.

Die Bereitstelleinrichtung 710 ist beispielhaft ausgebildet, ein Linsenhalterelement und ein Linsenträgerelement bereitzustellen. Die Auftragseinrichtung 720 ist im Folgenden ausgebildet, ein zumindest teilweise wellenförmig ausgeformtes Kleb an einem Außenumfang des Linsenträgerelements und/oder einem Innenumfang des Linsenhalterelements aufzutragen. Die Verbindungseinrichtung 730 ist nun ausgebildet, das Linsenhalterelement mit dem Linsenträgerelement zu verbinden, wobei ein Radius des Linsenträgerelements kleiner ist als ein Radius des Linsenhalterelements, sodass der Kleb in radialer Richtung zwischen einer Außenseite des Linsenträgerelements und einer Innenseite des Linsenhalterelements angeordnet wird, um das Bildsensorhalteelement herzustellen. Schließlich ist die Aushärtungseinrichtung 740 ausgebildet, den Kleb thermisch, elektrisch und/oder mittels Licht, insbesondere mittels UV-Licht und/oder Laserlicht, auszuhärten, um die Verbindung zwischen dem Linsenhalterelement und dem Linsenträgerelement zu fixieren.

Fig. 8 zeigt ein Ablaufdiagramm eines Ausführungsbeispiels eines Verfahrens 800 zur Herstellung eines Bildsensorhaltelements gemäß einem Ausführungsbeispiel. Hierbei kann das Verfahren 800 gemäß einem Ausführungsbeispiel auf der Vorrichtung zur Herstellung eines Bildsensorhalteelements aus Fig. 7 ausgeführt werden.

Das Verfahren 800 weist zunächst einen Schritt 810 auf, bei dem ein Linsenhalterelement und ein Linsenträgerelement bereitgestellt werden. In einem folgenden Schritt 820 des Verfahrens 800 wird ein Kleb zumindest teilweise in Wellenform an einem Außenumfang des Linsenträgerelements und/oder einem Innenumfang des Linsenhalterelements aufgetragen. Schließlich wird in einem Schritt 830 des Verfahrens 800 das Linsenhalterelement mit dem Linsenträgerelement verbunden, wobei ein Radius des Linsenträgerelements kleiner ist als ein Radius des Linsenhalterelements, sodass der Kleb in radialer Richtung zwischen einer Außenseite des Linsenträgerelements und einer Innenseite des Linsenhalterelements angeordnet wird, um das Bildsensorhalteelement herzustellen. In einem finalen Schritt 840 des Verfahrens 800 wird der Kleb thermisch, elektrisch und/oder mittels Licht, insbesondere UV-Licht und/oder Laserlicht, ausgehärtet, um die Verbindung zwischen dem Linsenhalterelement und dem Linsenträgerelement zu fixieren.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Bildsensorhalteelement (200) zur Halterung eines Bildsensors (120) und eines Objektivelements (115), wobei das Bildsensorhalteelement (200) die folgenden Merkmale aufweist:
ein Linsenhalterelement (205) zur Aufnahme des Bildsensors (120) und/oder eines Bildsensorträgers (210) ausgebildet ist;
ein Linsenträgerelement (215) das ausgebildet ist, zumindest ein Objektivelement (115) aufzunehmen, wobei das Linsenträgerelement (215) in dem Linsenhalterelement (205) angeordnet ist; und
ein Kleb (235), der in radialer Richtung zwischen dem Linsenhalterelement (205) und dem Linsenträgerelement (215) angeordnet ist, wobei der Kleb (235) zumindest teilweise eine Wellenform auf einem Außenumfang des Linsenträgerelements (215) und/oder einem Innenumfang des Linsenhalterelements (205) aufweist.

2. Bildsensorhalteelement (200) gemäß Anspruch 1, wobei das Linsenhalterelement (205) als ein umlaufender Ring ausgeformt ist, insbesondere wobei das Linsenhalterelement (205), insbesondere an der Schnittstelle zum Linsenträgerelement, eine radialsymetrische Form aufweist.

3. Bildsensorhalteelement (200) gemäß Anspruch 2, wobei der Kleb (235) durchgehend oder umlaufend auf einem Innenumfang des Linsenhalterelements (205) angeordnet ist, insbesondere wobei der Kleb (235) als Klebstoffraupe ausgeformt ist.

4. Bildsensorhalteelement (200) gemäß einem der vorangegangenen Ansprüche, wobei das Linsenhalterelement (205) an den Bildsensorträger (210) zum Aufnehmen des Bildsensors (120) geklebt und/oder geschweißt oder mechanisch befestigt ist.

5. Bildsensorhalteelement (200) gemäß einem der vorangegangenen Ansprüche, wobei das Linsenhalterelement (205) zumindest teilweise federnd, insbesondere radial federnd, ausgestaltet ist, insbesondere wobei das Linsenhalterelement (205) hervorstehende Finger (605) aufweist.

6. Bildsensorhalteelement (200) gemäß Anspruch 5, wobei der Kleb (235) einen federnden Teil des Linsenhalterelements (205), insbeosndere einen radial federnden Teil des Linsenhalterelements (205) und/oder einen der hervorstehenden Finger (605) des Linsenhalterelements (205) das Linsenhalterelement (205) kontaktiert.

7. Bildsensorhalteelement (200) gemäß Anspruch 5 oder 6, wobei der Kleb (235) an einer Außenkontur des einen radial federnden Teil des Linsenhalterelements (205), insbesondere dem Finger (605) des Linsenhalterelements (205) angeordnet ist, insbesondere wobei eine Form des einen federnden Teil des Linsenhalterelements (205) oder der Finger (605) des Linsenhalterelements (205) der Wellenform des Klebs (235) angepasst ist.

8. Kameraeinheit (100) zur Erfassung einer Umgebung (105), wobei die Kameraeinheit (100) einen Bildsensor (120), ein Objektivelement (115) und das Bildsensorhalteelement (200) gemäß einem der Ansprüche 1 bis 6 aufweist.

9. Verfahren (800) zur Herstellung eines Bildsensorhaltelements (200), wobei das Verfahren (800) die folgenden Schritte aufweist:
Bereitstellen (810) eines Linsenhalterelements (205) und eines Linsenträgerelements (215);
Auftragen (820) eines Klebs (235) zumindest teilweise in Wellenform an einem Außenumfang des Linsenträgerelements (215) und/oder einem Innenumfang des Linsenhalterelements (205); und
Verbinden (830) des Linsenhalterelements (205) mit dem Linsenträgerelement (215), wobei ein Radius des Linsenträgerelements (215) kleiner ist als ein Radius des Linsenhalterelements (205), sodass der Kleb (235) in radialer Richtung zwischen einer Außenseite des Linsenträgerelements (215) und einer Innenseite des Linsenhalterelements (205) angeordnet wird, um das Bildsensorhalteelement (200) gemäß einem der Ansprüche 1 bis 7 herzustellen.

10. Verfahren (800) gemäß Anspruch 9, wobei der Schritt (810) des Bereitstellens, der Schritt (820) des Auftragens und/oder der Schritt (830) des Verbindens wiederholt ausgeführt werden, wobei bei einem wiederholt ausgeführten Schritt (820) des Auftragens der Kleb (235) in einer anderen wellenförmigen Kontur aufgetragen wird, als in einem vorangegangenen Schritt (820) des Auftragens.

11. Verfahren (800) gemäß Anspruch 9 mit einem Schritt (840) des Aushärtens, wobei der Kleb (235) thermisch, elektrisch, chemisch und/oder mittels Licht, insbesondere UV-Licht und/oder Laserlicht ausgehärtet wird.

12. Vorrichtung (700), die eingerichtet ist, um die Schritte (810, 820, 830, 840) des Verfahrens (800) gemäß einem der vorangegangenen Ansprüche 1 bis 7 in entsprechenden Einheiten auszuführen und/oder anzusteuern.

13. Computerprogramm, das dazu eingerichtet ist, die Schritte (810, 820, 830, 840) des Verfahrens (800) gemäß einem der vorangegangenen Ansprüche auszuführen und/oder anzusteuern.

14. Maschinenlesbares Speichermedium, auf dem das Computerprogramm nach Anspruch 13 gespeichert ist.
